# EUROPÄISCHE PATENTANMELDUNG

(11) **EP 1 584 865 A2**
(43) Veröffentlichungstag der Anmeldung: **12.10.2005**
(21) Anmeldenummer: 05007507.6
(22) Anmeldetag: 06.04.2005
(51) Int. Cl.: F21V 17/16, F21V 17/12, F16B 2/06

(54) **Verbindungsmittel für Leuchtenelemente**

(30) Priorität: 06.04.2004 DE 102004016817
(71) Anmelder: TRILUX-LENZE GmbH + Co. KG, 59759 Arnsberg (DE)
(72) Erfinder: Klein, Christoph, Dipl.-Ing., 59821 Arnsberg (DE); Niggemann, Rudolf, Dipl.-Ing., 59759 Arnsberg (DE)
(74) Vertreter: Lippert, Stachow & Partner

(57) **Zusammenfassung**

Die Erfindung betrifft Leuchtenelemente, die an einer Trennebene gegeneinander anliegen und über ein Verbindungsmittel lösbar miteinander verbindbar sind. Um eine einfache Befestigung der Leuchtenelemente auch bei der Überkopfmontage zu ermöglichen und die Montagezeit zu verringern wird erfindungemäß vorgeschlagen, dass die Leuchtenelemente jeweils mit Andruckflächen 22 ausgebildet sind und dass das Verbindungsmittel ein brückenartiges Klemmstück 30 umfassen, das in Einbaulage die Trennebene überspannt und mit Klemmandruckflächen 32,34 aufweist, die in Einbaulage an den Andruckflächen 22 der Leuchtenelemente anliegen (Fig. 3).

## Beschreibung

Die Erfindung betrifft Leuchtenelemente, die an einer Trennebene gegeneinander anliegen und über ein Verbindungsmittel lösbar miteinander verbindbar sind. Der Begriff Leuchtenelemente umfasst Leuchtengehäuse und andere Leuchtensystembestandteile, die mit einem Leuchtengehäuse verbunden werden, wie zum Beispiel ein an dem Kopfende eines Leuchtengehäuses zu befestigendes Kopfstück, einen Knotenpunkt zur winkligen Verbindung mehrer Leuchtengehäusen aneinander und dergleichen.

Mitunter ist zwischen den gegeneinander anliegenden Leuchtenelementen ein Zentriermittel ausgebildet, welches einen ungewünschten versatz der Leuchtenelemente im Verhältnis zueinander verhindert; zum Beispiel ein durch beide Leuchtenelemente ragender Stift oder eine zwischen den Leuchtenelementen ausgebildete Nut-/Feder-Verbindung.

Im Rahmen der Montage wird eine Schraube zwischen den beiden aneinander anliegenden Anlageflächen in Längsrichtung der Leuchtenelemente eingedreht, um die beiden Leuchtenelemente gegeneinander zu fixieren. Diese Verbindungstechnik ist relativ aufwendig, insbesondere weil Hand- und Akkuschrauber wegen des beschränkten Platzes in den Leuchtenelementen nicht einsetzbar sind. Bei zunehmend geringer werdenden Querschnitten der Leuchtenkörper, zum Beispiel 30mm × 30mm, kann man die Schrauben nur schwer in Längsrichtung eindrehen. Um ein Auseinanderbiegen der Leuchtenelemente an der Trennebene zu unterbinden, werden diese Schrauben möglichst an dem - von oben gesehen - unteren Ende der Leuchtelemente angeordnet. Dieses erschwert die Montage zusätzlich, da ein Monteur von oben in die Leuchtenelemente eingreifen muss.

Ausgehend von diesem Stand der Technik legt die Erfindung die Aufgabe zugrunde, diese Nachteile zumindest teilweise zu vermeiden und eine einfache Befestigung der Leuchtenelemente auch bei der Überkopfmontage zu ermöglichen und die Montagezeit zu verringern.

Erfindungsgemäß wird diese Aufgabe dadurch gelöst, dass die Leuchtenelemente jeweils mit Andruckflächen ausgebildet sind und dass das verbindungsmittel ein brückenartiges Klemmstück ausgebildet ist, das in Einbaulage die Trennebene überspannt und Klemmandruckflächen aufweist, die in Einbaulage an den Andruckflächen der Leuchtenelemente anliegen.

Bei der Montage werden die beiden Leuchtenelemente somit nur gegeneinander angepresst und das Klemmstück wird so auf die beiden Leuchtenelemente aufgesetzt, dass diese die Trennebene überbrückt und die Klemmandruckflächen gegen die Andruckflächen der Leuchtenelemente anliegen. Entscheidend ist dabei, dass das Klemmstück in Einbaulage einen Presssitz zwischen den Leuchtenelementen herstellt. Dieses kann entweder durch entsprechende Dimensionierung oder Werkstoffauswahl des Klemmstücks selbst erfolgen.

Vorzugsweise riechen Klammerandruckflächen in Einbaulage bis an das untere Ende der zu verbindenden Leuchtenelemente, um ein Aufbiegen an der Trennebene zu unterbinden.

Die Montage wird zusätzlich vereinfacht, wenn die Andruckflächen der Leuchtenelemente und Klemmandruckflächen so korrespondierend ausgebildet sind, dass das Klemmstück die Leuchtenelemente bei der Montage zusammenzieht. Dieses kann beispielsweise dadurch erzielt werden, dass sich die Andruckflächen nach unten - in Aufschubrichtung des Klemmstücks - prismatisch verbreitern und sich der Abstand der Klemmerandruckflächen korrespondierend in Aufschubrichtung prismatisch verjüngt. Die Querschnittsfläche der Ausnehmung zwischen den Klemmandruckflächen und dem diese verbindenden Verbindungssteg ist mithin trapezförmig; die Andruckflächen der Leuchtenelemente bilden zusammengesetzt einen Pyramidenstumpf.

Durch das Aufsetzen bzw. Aufschieben des Klemmstücks werden die beiden aneinander anliegenden Leuchtenelemente fest miteinander verspannt und aneinander gepresst. Der besondere Vorteil des erfindungsgemäßen Klemmstücks liegt darin, dass dieses in Querrichtung zur Leuchte und zur Trennebene montierbar ist. Deswegen kann das Klemmstück leicht von oben auf die zu verbindenden Leuchtenelemente aufgesetzt werden. In einer vorteilhaften Weiterentwicklung kann das Klemmstück fertig vormontiert an einem der Leuchtenelemente fixiert sein, sodass zur Fixierung der beiden Leuchtenelemente die Klammer nur noch heruntergedrückt werden muss. Dieses kann z.B. durch einen Bügel erfolgen, in dem das Klemmstück verschieblich aufgenommen ist.

Eine besonders stabile Verbindung ist realisierbar, wenn das Klemmstück aus einem Werkstoff mit einer hohen Zugfestigkeit gefertigt ist, z.B. einer zähen Stahllegierung; als besonders vorteilhaft hat sich 42CrMo4 erwiesen.

Die Erfindung wird nachfolgend anhand einer bevorzugten Ausführungsform beschrieben, wobei auf die beigefügten Zeichnungen Bezug genommen wird. In diesen zeigen:
- Figur 1: eine perspektivische Draufsicht des Kopfendes eines Leuchtengehäuses;
- Figur 2: eine perspektivische Ansicht des erfindungsgemäßen Klemmstücks; und
- Figur 3: einen vergrößerten Ausschnitt durch das Leuchtengehäuse entlang der Linie III - III gemäß Fig. 1.

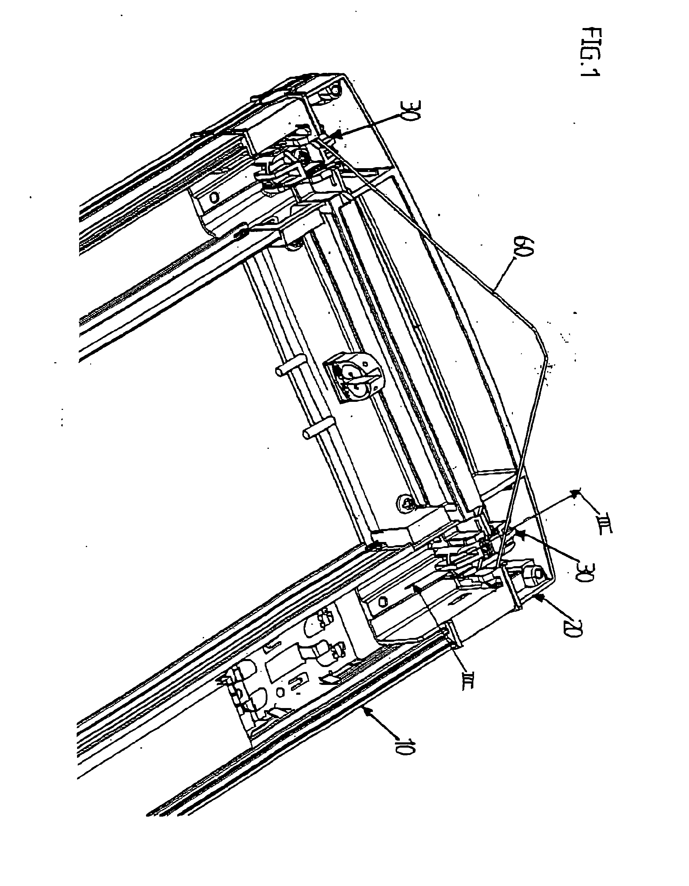

Figur 1 zeigt eine Draufsicht eines als Hängeleuchte ausgebildeten Leuchtengehäuses 10, an dem ein Kopfstück 20 mittels zwei der erfindungsgemäßen Klemmstücke 30 befestigt ist.

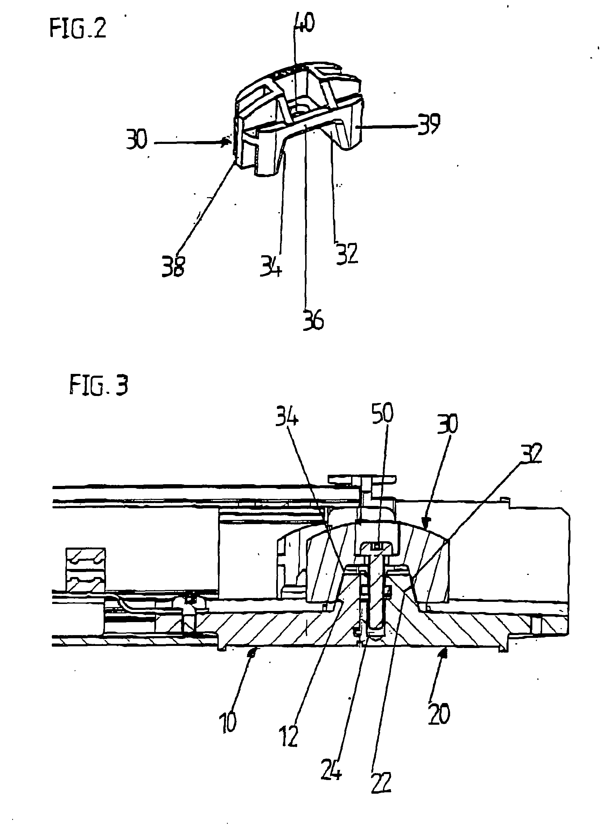

Die genaue Verbindungstechnik ist aus der Figur 3 zu entnehmen. Demnach liegen das Leuchtengehäuse 10 und das Kopfstück 20 an einer senkrechten Trennebene flächig gegeneinander an; zur Vermeidung eines Querversatzes ist zwischen dem Leuchtengehäuse 10 und dem Kopfstück 20 zusätzlich eine Nut-/Feder-Verbindung ausgebildet. Diese Nut-/Feder-Verbindung realisiert zudem eine lichtdichte Verbindung an der Trennebene.

An der Befestigungsstelle der Klemmstücke 30 weisen das Leuchtengehäuse 10 und das Kopfstück 20 jeweils Andruckflächen 12 und 22 auf, die sich in Aufschubrichtung des Klemmstücks 30 nach unten verbreitern. Die Andruckflächen bilden im zusammengesetzten Zustand einen Pyramidenstumpf.

Korrespondierend zu den geneigten Andruckflächen 12, 22 weisen die Klemmstücke 30 auf der Innenseite einander zugewandt Klemmandruckflächen 32, 34 auf, die zum oberen Ende des Klemmstücks 30, also in Aufschubrichtung, schräg aufeinander zu laufen. Die Ausschnittsfläche innerhalb der Klemmstücks 30 ist mithin trapezförmig ausgebildet mit schräg nach oben aufeinander zu laufenden Klemmandruckflächen 32, 34.

Das Klemmstück 30 ist brückenartig aufgebaut. Es besteht aus einem Verbindungssteg 36, der quer zu der Längserstreckungsrichtung des Verbindungsstegs und im Wesentlichen parallel zueinander von dem Verbindungssteg abragende und einstückig angeformte Anpressstege 38, 39 aufweist. Auf den einander zugewandten Innenseiten der Anpressstege 38, 39 sind die prismatisch aufeinander zu laufenden Klemmandruckflächen 32 und 34 ausgebildet. Mittig in dem Verbindungssteg 36 ist eine Durchgangsbohrung 40 vorgesehen. In diese Durchgangsbohrung 40 ist eine Befestigungsschraube 50 einsetzbar, die in eine Gewindebohrung 24 an dem Kopfstück 20 einschraubbar ist. Alternativ kann diese Gewindebohrung auch an dem Leuchtengehäuse 10 ausgebildet sein.

Beim Einschrauben der Befestigungsschraube 50 wird das Klemmstück 30 mit den Klemmandruckflächen 32, 34 auf die Andruckflächen 12, 22 der Leuchtenelemente aufgeschoben und presst dabei das Leuchtengehäuse 10 und das Kopfstück 20 an der Trennebene fest gegeneinander. Die Montage kann in einfacher Weise von oben und quer zur Längsrichtung der Leuchte erfolgen. Die Befestigungsschraube 50 ist bei der Montage einfach von oben zugänglich, da sie in der Trennebene oder parallel zu dieser verläuft, in jedem Fall aber quer zur Längsrichtung der Leuchte.

Wie aus den Figuren 1 und 3 zu entnehmen ist, sind im Bereich der Montagestellen der Klemmstücke 30 in Einbaulage zueinander fluchtende Ausnehmungen in der Stirnwand des Leuchtengehäuses 10 und des Kopfstückes 20 ausgebildet, in welche die Klemmstücke 30 bei der Montage so einsetzbar sind, dass die Klemmstücke 30 in dem Leuchtengehäuse 10 und dem Kopfstück 20 versenkt sind.

Gemäß Fig.1 sind zwischen dem Leuchtengehäuse 10 und dem Kopfstück 20 nicht näher dargestellte Seilkauschen eines Montageseils 60 zur Montage der Leuchte als Hängeleuchte eingeklemmt. Um die sicherheitstechnisch erforderliche Festigkeit der Verbindung zwischen Leuchtengehäuse 10 und Kopfstück 20 sicherzustellen, sind die erfindungsgemäßen Klemmstücke 30 aus einer 42CrMo4-Stahllegierung gefertigt. Vorzugsweise wird das Klemmstück unmittelbar als in der in Figur 2 perspektivisch dargestellten Form als Pressteil mit außenseitigen Versteifungsrippen zur Erhöhung der Steifigkeit bei gleichzeitiger Gewichtsreduktion gefertigt.

Für den Fachmann ist ersichtlich, dass das erfindungsgemäße Klemmstück außer für Leuchtenelemente auch zur festen Verbindung anderer Bauteile geeignet ist, die flächig aneinander anliegen.

### Bezugszeichenliste

- 10: Leuchtengehäuse
- 12: Andruckfläche
- 20: Kopfstück
- 22: Andruckfläche
- 24: Bohrung
- 30: Klemmstück
- 32: Klemmandruckfläche
- 34: Klemmandruckfläche
- 36: Verbindungssteg
- 38: Anpresssteg
- 39: Anpresssteg
- 40: Durchgangsbohrung
- 50: Befestigungsschraube
- 60: Montageseil

## Patentansprüche

1. Leuchtenelemente (10,20), die an einer Trennebene gegeneinander anliegen und über ein Verbindungsmittel lösbar miteinander verbindbar sind, **DADURCH GEKENNZEICHNET, dass** die Leuchtenelemente (10,20) jeweils mit Andruckflächen (12,22) ausgebildet sind und dass das verbindungsmittel als ein brückenartiges Klemmstück (30) mit Klemmandruckflächen (32,34) ausgebildet sind, die in Einbaulage an den Andruckflächen (12,22) der Leuchtenelemente (10,20) anliegen und die Leuchtenelemente (10,20) gegeneinander drücken.

2. Leuchtenelemente (10,20) nach Anspruch 1, **DADURCH GEKENNZEICHNET, dass** die Andruckflächen (12,22) der Leuchtenelemente (10,20) und die Klemmandruckflächen (32,34) so korrespondierend ausgebildet sind, dass das Klemmstück (30) die Leuchtenelemente (10,20) bei der Montage aufeinander zuzieht.

3. Leuchtenelemente (10,20) nach Anspruch 2, **DADURCH GEKENNZEICHNET, dass** sich die Andruckflächen (12,22) der Leuchtenelemente (10,20) - in Aufschubrichtung des Klemmstücks (30) - prismatisch verbreitern und sich die Klemmandruckflächen (32,34) korrespondierend prismatisch verjüngen.

4. Leuchtenelemente (10,20) nach einem der vorhergehenden Ansprüche, **DADURCH GEKENNZEICHNET, dass** das Klemmstück (30) aus einem Werkstoff mit hoher Zugfestigkeit besteht.

5. Leuchtenelemente (10,20) nach einem der vorhergehenden Ansprüche, **DADURCH GEKENNZEICHNET, dass** diese Ausnehmungen an der Trennebene zum Versenken des Klemmstücks (30) umfassen.

6. Leuchtenelemente (10,20) nach einem der vorhergehenden Ansprüche, **DADURCH GEKENNZEICHNET, dass** das Klemmstück (30) über eine Befestigungsschraube (50), mit einem Leuchtenelement (10,20) verbindbar ist.

7. Befestigungsmittel zur Verbindung von zwei an einer Trennebene gegeneinander anliegenden Leuchtenelemente (10,20), **DADURCH GEKENNZEICHNET, dass** dieses als brückenartiges Klemmstück (30) mit einem Verbindungssteg (36), der an seinen Enden quer zu der Längserstreckungsrichtung des verbindungsstegs (36) und im wesentlichen parallel zueinander von diesem abragende Anpressstege (38, 39) mit Klemmandruckflächen (32,34) an den einander zugewandten Innenseiten aufweist.

8. Befestigungsmittel nach Anspruch 7, **DADURCH GEKENNZEICHNET, dass** die Klemmandruckflächen (32,34) in Aufschubrichtung prismatisch verjüngend ausgebildet sind.

9. Befestigungsmittel nach Anspruch 7 oder 8, **DADURCH GEKENNZEICHNET, dass** das Klemmstück (30) aus einem zähen Werkstoff, vorzugsweise 42CrMo4, gefertigt ist.

10. Befestigungsmittel nach einem der Ansprüche 7 bis 9, **DADURCH GEKENNZEICHNET, dass** das Klemmstück (30) in dem Verbindungssteg (36) eine Durchgangsbohrung (40) für eine Befestigungsschraube (50) aufweist.
